# FASCICULE DE BREVET EUROPEEN

(11) **EP 4 405 745 B1**
(45) Date de publication et mention de la délivrance du brevet: **07.10.2026**
(21) Numéro de dépôt: 22789521.6
(22) Date de dépôt: 15.09.2022
(51) Int. Cl.: G03B 9/06, G02B 5/00

(54) **DIAPHRAGME À IRIS À FORME PRÉDÉTERMINÉE, SANS ROTATION DE FORME**
IRISBLENDE MIT VORBESTIMMTER FORM OHNE FORMDREHUNG
IRIS DIAPHRAGM HAVING A PREDETERMINED SHAPE, WITHOUT SHAPE ROTATION

(30) Priorité: 21.09.2021 FR 2109912
(43) Date de publication de la demande: 31.07.2024
(73) Titulaire: THALES, 92190 Meudon (FR)
(72) Inventeur: MONTAGNE, Laurent, 69100 VILLEURBANNE (FR)
(74) Mandataire: Atout PI Laplace
(86) Numéro de dépôt international: PCT/EP2022/075610
(87) Numéro de publication internationale: WO 2023/046561

(56) Documents cités:
- DE-U1- 202015 009 206
- US-A- 4 047 807
- US-A1- 2008 304 126
- US-B1- 8 164 813

## Description

### Domaine technique :

La présente invention concerne le domaine des diaphragmes à iris.

### Technique antérieure :

Les objectifs des appareils photographiques et des caméras cinématographiques sont généralement équipés de diaphragmes circulaires transversalement à l'axe optique des lentilles. La circularité sur toutes les ouvertures est souhaitable si l'on veut s'accommoder de la qualité des objectifs constitués de lentilles sphériques avec le moins d'aberrations possible dans l'image enregistrée.

Pour réaliser ces diaphragmes, il est possible d'utiliser simple trou sur une paroi interposée sur le trajet lumineux, ou, plusieurs trous placés sur un élément mobile permettent un réglage succinct de différent diamètre d'ouverture.

D'autres systèmes optiques nécessitant une plus grande compacité ou un très grand nombre d'ouvertures différentes utilisent le diaphragme à iris, qui permet un réglage continu entre sa pleine ouverture et sa fermeture maximale.

Un diaphragme à iris est constitué d'un ensemble de lamelles dont la tranche décrit un polygone régulier.

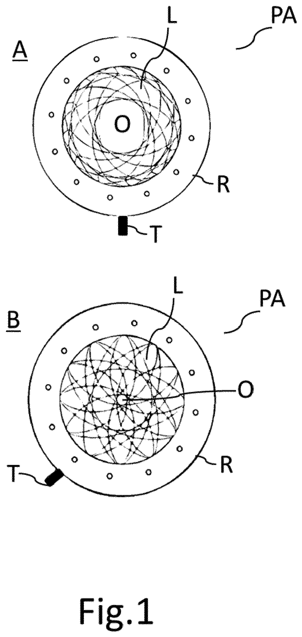

La figure 1 présente un diaphragme à iris PA de l'art antérieur avec une ouverture O selon une configuration A avec une ouverture plus fermée que la configuration B. Le diaphragme à iris PA comprend une pluralité de lamelles L typiquement en métal ou en plastique. Afin de permettre le réglage de la dimension de l'ouverture, chaque lamelle est par exemple reliée à une rondelle R par une liaison pivot d'axe perpendiculaire au plan du diaphragme ou est déplaçable par translation par rapport à la rondelle R. Le déplacement contrôlé des lamelles permet de fermer ou ouvrir l'ouverture O. L'ouverture ou la fermeture du diaphragme à iris est typiquement contrôlée par un ergot T placé sur la tranche de la rondelle du diaphragme.

Le nombre et la forme des lamelles composant l'iris est variable. La forme de cette ouverture donnera la forme des taches du flou d'arrière-plan ou bokeh. Ainsi, les objectifs à grande ouverture et disposant d'un diaphragme à lames arrondies et nombreuses (8 ou 9) permettent des bokeh à l'aspect bien circulaire et une transition plus franche avec la zone nette. Plus le nombre de lamelles est élevé, plus la forme des taches se rapprochera d'un disque parfait. À l'inverse, certains objectifs produisent des bokeh pentagonaux, ou hexagonaux, en fonction du nombre de lamelles qui forment le diaphragme de l'objectif. La forme du bokeh peut aussi être ovale, selon la conception optique de l'objectif, et notamment en cas d'utilisation d'un objectif anamorphique (par exemple dans le cas d'objectifs cinématographiques).

Le contrôle de la forme des bokehs et de leur orientation est important dans certaines applications (photographie et cinéma). Dans les diaphragmes de l'art antérieur, les formes tournent en fonction de l'ouverture du diaphragme. Cet effet est indésirable. Des autres diaphragmes sont divulgués dans US8164813B.

L'invention vise à pallier certains problèmes de l'art antérieur. A cet effet, un objet de l'invention est un diaphragme à iris à forme prédéterminée présentant une structure adaptée pour définir une ouverture produisant un bokeh dont le type de forme et l'orientation ne change pas en fonction de l'ouverture du diaphragme.

### Résumé de l'invention :

A cet effet, un objet de l'invention est un diaphragme à iris présentant un axe optique et comprenant :
- une rondelle fixe,
- une pluralité de $m ∈ ℕ > 1$ lamelles définissant une ouverture du diaphragme avec une forme prédéterminée, les lamelles pouvant se déplacer dans un plan perpendiculaire à l'axe optique par rapport à la rondelle fixe, chaque lamelle comprenant un pion de commande,
- une rondelle de commande adaptée pour tourner autour de l'axe optique par rapport à la rondelle fixe et comprenant m rampes de commande, chaque pion de commande étant déplaçable dans une des rampes de commande respective en prenant appui le long de la rampe de commande respective,
- une rotation de la rondelle de commande autour de l'axe optique entrainant, via le déplacement des pions de commande dans les rampes de commande, le déplacement dans le plan perpendiculaire à l'axe optique des lamelles par rapport à la rondelle fixe de manière à modifier une surface de l'ouverture en maintenant la forme prédéterminée de l'ouverture, sans induire une rotation de la forme prédéterminée par rapport à la rondelle fixe.

Selon le mode de réalisation M1 de l'invention, la rondelle fixe comprend une pluralité de $n ∈ ℕ \geq 2 m$ rampes de guidage, et dans lequel chaque lamelle comprend deux pions mobiles respectifs chacun déplaçable dans une des rampes de guidage respective en prenant appui le long de la rampe de guidage respective, une forme de chaque rampe de guidage étant telle que la rotation de la rondelle de commande autour de l'axe optique entraine le déplacement de chacun des pions mobiles dans les rampes de guidage et produise le déplacement des lamelles par rapport à la rondelle fixe. Préférentiellement, *m* = 2 et la forme prédéterminée étant un œil de chat

Préférentiellement, dans le mode de réalisation M1, chaque lamelle est associée à deux rampes de guidage respectives dans lequel les deux pions mobiles de cette lamelle sont déplaçables.

Préférentiellement, dans le mode de réalisation M1, le pion de commande de chaque lamelle est agencé entre les deux pions mobiles de cette lamelle.

Préférentiellement, dans l'invention, la rondelle fixe et la rondelle de commande sont configurées pour induire la rotation de la rondelle de commande autour de l'axe optique dans un secteur angulaire prédéterminé. Préférentiellement, la rondelle fixe et la rondelle de commande sont configurées pour définir une dimension maximale transverse de l'ouverture.

Préférentiellement, dans l'invention, les lamelles et les rampes de guidages présentent une symétrie centrale par rapport à l'axe optique.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1], une vue schématique d'un diaphragme à iris de l'art antérieur,
[Fig.2], une vue éclatée d'un diaphragme selon un mode de réalisation de l'invention,
[Fig.3A], [Fig.3B], [Fig.3C], une vue de face de la rondelle fixe et des lamelles d'un diaphragme selon un mode de réalisation de l'invention pour différentes ouvertures du diaphragme,
[Fig.4A], [Fig.4B], [Fig.4C], une vue de face d'un diaphragme selon un mode de réalisation de l'invention pour différentes ouvertures du diaphragme,
[Fig.5], une vue éclatée d'un diaphragme selon un mode de réalisation de l'invention,
[Fig.6A], [Fig.6B], [Fig.6C], une vue de face de la rondelle fixe et des lamelles d'un diaphragme selon un mode de réalisation de l'invention pour différentes ouvertures du diaphragme,

Dans les figures, sauf contre-indication, les éléments sont à l'échelle.

### Description détaillée :

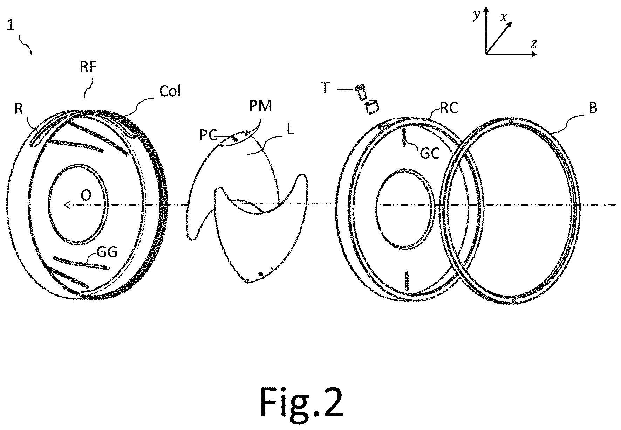

La figure 2 illustre schématiquement une vue éclaté d'un diaphragme à iris 1 selon l'invention, particulièrement adapté pour des objectifs de caméra ou des objectifs de photographie. La configuration illustrée dans cette figure, appelée mode de réalisation M1 par la suite, est donnée à titre d'exemple non limitatif et pourra être modifié selon des variantes du évidentes pour l'homme l'art sans sortir du cadre de l'invention.

Le diaphragme 1 comprend une rondelle fixe RF qui constitue le seul élément du diaphragme qui reste immobile par rapport à l'axe optique O du diaphragme. Il s'agit de l'élément par rapport auquel les autres pièces du diaphragme 1 vont se déplacer. Dans l'illustration de la figure 2, à titre d'exemple, l'axe optique O est perpendiculaire au plan xy du diaphragme et est selon la direction z.

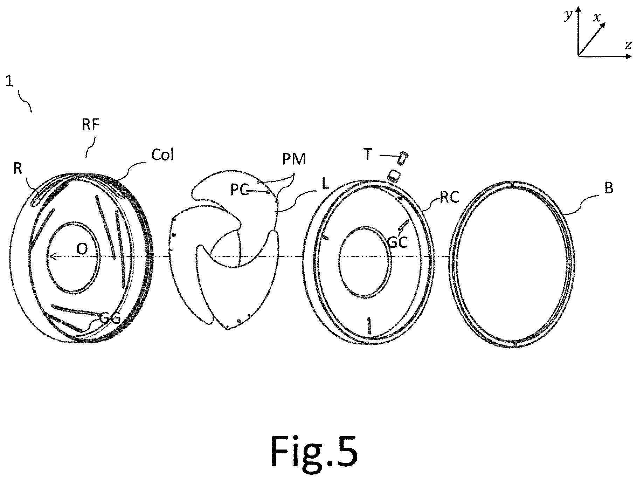

Le diaphragme comprend une pluralité de $m ∈ ℕ > 1$, c'est-à-dire au moins deux, lamelles L dont la tranche décrit des segments de courbes, l'ensemble des lamelles définissant une ouverture OD sous la forme d'un polygone régulier. Dans l'invention, les lamelles définissent une ouverture OD du diaphragme avec une forme prédéterminée. A titre d'exemple non limitatif, dans le mode de réalisation M1 illustré en figure 2, le diaphragme 1 comprend m = 2 lamelles et la forme prédéterminée de l'ouverture est un « œil de chat », c'est-à-dire une forme définie par l'intersection de deux arcs de cercle ou arcs d'ellipse. Alternativement, selon un autre mode de réalisation, diaphragme 1 comprend m>2 lamelles et la forme prédéterminée de l'ouverture est plus complexe (voir par exemple figures 5 à 6C).

Compte tenu de la forme prédéterminée de l'ouverture OD, le bokeh obtenu à l'aide du diaphragme de l'invention aura lui aussi la même forme prédéterminée.

Afin de pouvoir modifier la dimension de l'ouverture, dans le diaphragme de l'invention, chaque lamelle peut se déplacer dans un plan perpendiculaire à l'axe optique par rapport à la rondelle fixe. Comme cela sera expliqué plus loin, ce déplacement peut être réalisé de différente manière. En outre, chaque lamelle comprend un pion de commande PC. Par « comprendre un pion », on entend que le pion de commande PC est solidaire de la lamelle L respective, ou autrement dit que le pion de commande PC est encastré dans la lamelle L respective.

Enfin, le diaphragme 1 comprend une rondelle de commande RC adaptée pour tourner autour de l'axe optique par rapport à la rondelle fixe RF. La rondelle de commande RC est l'élément du diaphragme qui permet d'entrainer le déplacement des pions de commande PC par rapport à la rondelle fixe RF. Pour cela, la rondelle de commande comprend autant de rampes de commande GC que de lamelles et chaque pion de commande PC est déplaçable dans une des rampes de commande respective en prenant appui le long de la rampe de commande respective. Ainsi, la rotation de la rondelle de commande RC entraine le déplacement des pions de commande PC dans les rampes de commande GC. La disposition et le déplacement des différents éléments du diaphragme du mode de réalisation M1 sont visibles dans les figures 2 à 4C.

Contrairement au diaphragme à iris de l'art antérieur, l'ouverture OD du diaphragme 1 de l'invention produit un bokeh dont le type de forme et l'orientation ne change pas en fonction de l'ouverture du diaphragme. Il est donc nécessaire que la forme et l'orientation de l'ouverture OD reste identique quelle que soit l'ouverture du diaphragme de l'invention. Pour cela, une rotation de la rondelle de commande RC autour de l'axe optique entraine, via le déplacement des pions de commande PC dans les rampes de commande, le déplacement des lamelles dans le plan perpendiculaire à l'axe optique par rapport à la rondelle fixe par rapport à la rondelle fixe de manière à modifier une surface de l'ouverture en maintenant la forme prédéterminée de l'ouverture, sans induire une rotation de la forme prédéterminée par rapport à la rondelle fixe. Par « maintenir la forme prédéterminée », on entend ici que l'ouverture ou la fermeture du diaphragme conserve même type de forme de l'ouverture OD et seulement la surface de l'ouverture change.

Selon le mode de réalisation M1, le déplacement des lamelles par rapport à la rondelle fixe RF est réalisé à l'aide des rampes de guidage GG. Plus précisément, la rondelle fixe RF comprend une pluralité de $n ∈ ℕ \geq 2 m$*,* c'est-à-dire au moins 4, rampes de guidage GG, et chaque lamelle comprend deux pions mobiles PM respectifs chacun déplaçable dans une des rampes de guidage GG respective en prenant appui le long de la rampe de guidage respective. Ainsi, la forme de chaque rampe de guidage est telle que la rotation de la rondelle de commande RC autour de l'axe optique entraine le déplacement de chacun des pions mobiles PM dans les rampes de guidage GG et produit le déplacement des lamelles par rapport à la rondelle fixe. Alternativement, selon un autre mode de réalisation, la position des pions mobiles et des rampes de guidage est inversée, c'est-à-dire que les rampes de guidages sont comprises dans les lamelles et les pions mobiles sont compris dans la rondelle fixe.

Il est entendu que l'invention n'est pas limitée aux formes des rampe de guidage illustrées dans les figures 2 à 4C, mais couvre toutes les formes de rampes de guidage tant qu'elles permettent d'obtenir l'effet recherché, à savoir le maintien de la forme et de l'orientation de l'ouverture. Au vu de la description de l'invention et des figures, l'homme de l'art saura adapter la forme des rampes de guidage et celle des lamelles sans nécessiter un nombre déraisonnable d'expérimentations. Le point clef de l'invention est, que l'utilisation des rampes de guidages pour guider le déplacement des pions mobiles des lamelles et donc entrainer le déplacement des lamelles par rapport à la rondelle fixe, couplée à une rondelle de commande pour entrainer le déplacement des pions mobiles, permet de maintenir la forme et l'orientation de l'ouverture.

Le nombre de pions mobiles PM par lamelle est de préférence égal à deux pour éviter d'obtenir un système hyperstatique. Ainsi, chaque lamelle est associée à deux rampes de guidage respectives dans lequel les deux pions mobiles de cette lamelle sont déplaçables. En outre, afin de limiter les contraintes mécaniques lors du déplacement des pions mobiles dans les rampes de guidages, de manière préférentielle, le pion de commande de chaque lamelle est agencé entre les deux pions mobiles de cette lamelle.

De préférence, les lamelles L sont agencées de manière à s'étendre sensiblement dans un plan perpendiculaire à l'axe optique (et donc parallèle au plan xy de la rondelle fixe RF). En pratique, les lamelles L se chevauchent et glissent les unes sur les autres. Chaque lamelle L s'étend dans le plan xy. Leur épaisseur est très faible par rapport à leur dimensions dans le plan *xy.* On peut considérer que l'ouverture OD s'étend également dans le plan *xy.* Dans le mode de réalisation M1, les lamelles et les rampes de guidages présentent une symétrie centrale par rapport à l'axe optique

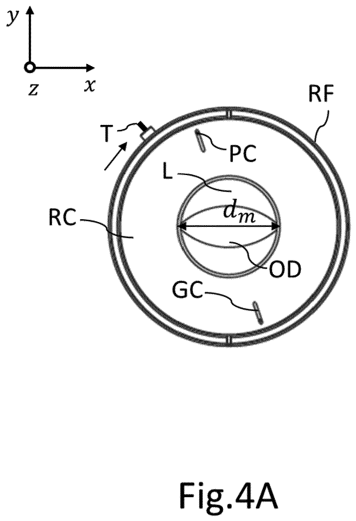

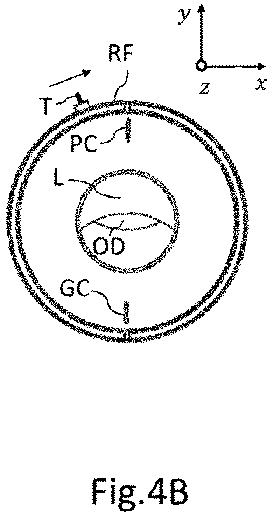

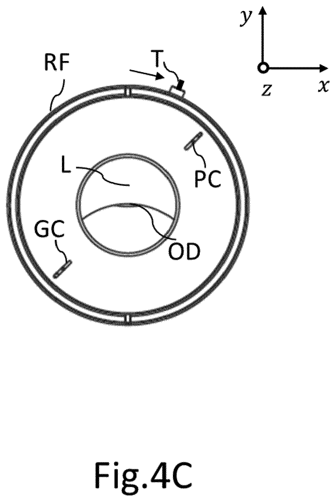

Selon un mode de réalisation préféré de l'invention, la rondelle fixe RF et la rondelle de commande RC sont configurées pour induire la rotation de la rondelle de commande autour de l'axe optique dans un secteur angulaire prédéterminé. A titre d'exemple non limitatif, dans le diaphragme du mode de réalisation M1 de la figure 2, la rondelle fixe RF comprend une collerette Col présentant une rainure R. De plus, le diaphragme comprend un ergot T solidaire de la rondelle de commande et déplaçable dans la rainure en prenant appui le long de la rainure. La longueur de la course de l'ergot T dans la rainure R fixe l'amplitude angulaire de rotation possible de la rondelle de commande RC et donc limite l'ouverture et la fermeture atteignable de l'ouverture OD. La figure 2 illustre le fait que l'action de l'utilisateur sur l'ergot T, représenté par une flèche sur les figures 4A à 4C, permet la rotation de la rondelle de commande et le déplacement du pion de commande dans la rampe de commande. Alternativement, selon un autre mode de réalisation, la rotation est réalisée par un bouton rotatif, par exemple déporté sur la collerette.

Le diaphragme de la figure 2 comprend en outre une bague B solidaire de la collerette et adaptée pour maintenir les éléments RF, L et RC à proximité les unes des autres sans limiter la rotation de la rondelle RC par rapport à la rondelle RF. Plus précisément, la bague B interdit la translation de la rondelle RC le long de l'axe optique O par rapport à la rondelle fixe RF. La bague B est par exemple réalisée sous forme d'un circlips intérieur mis en place dans une gorge de la collerette Col.

Les rondelles RF, RC sont réalisées dans un matériau diffusant pour la lumière visible, par exemple en aluminium anodisé et coloré en noirs, puis recouvertes d'un traitement lubrifiant noir mat qui réduit la lumière parasite.

Dans l'empilement du diaphragme du mode de réalisation M1, les lamelles sont agencées entre la rondelle de commande et la rondelle fixe. Cette conception mécanique est la plus simple pour que les pions mobiles des lamelles puisse se déplacer dans les rampes de guidage. En outre, cette conception permet de protéger partiellement les lamelles par les rondelles RC et RF.

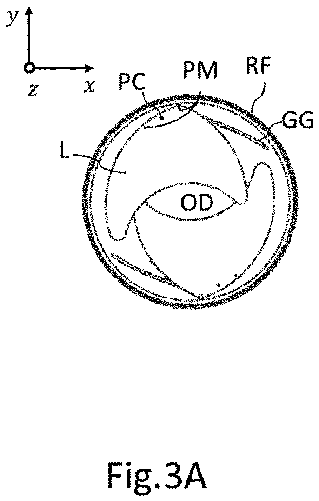

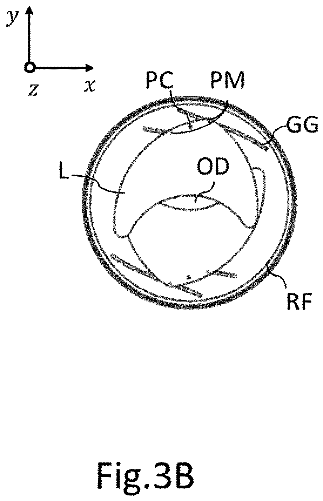

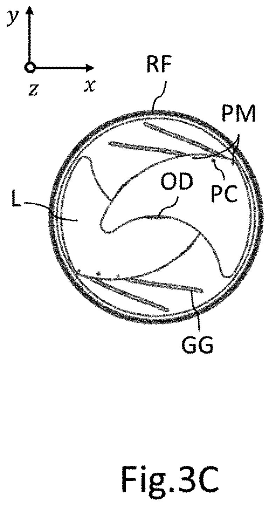

Les figures 3A à 4C sont des représentations des différents éléments du diaphragme du mode de réalisation M1 illustré en figure 2. Comme expliqué précédemment, les représentations sont données à titre d'exemple non limitatif et le mode de réalisation M1 illustrée dans ces figures pourra être modifié selon des variantes évidentes pour l'homme l'art sans sortir du cadre de l'invention.

Les figures 3A à 3C illustrent une vue de face de la rondelle fixe RF et des lamelles L du diaphragme du mode de réalisation M1 pour différentes ouvertures du diaphragme (allant du plus ouvert pour la figure 3A vers le plus fermé pour 3C). Ces figures permettent d'observer la manière dont les lamelles se déplacent par rapport à la rondelle fixe en fonction de l'ouverture, ce déplacement étant induit par le déplacement des pions mobiles selon les rampes de guidage GG.

Les figures 4A à 4C illustrent une vue de face du diaphragme du mode de réalisation M1 pour différentes ouvertures du diaphragme (allant du plus ouvert pour la figure 4A vers le plus fermé pour 4C). Le diaphragme du mode de réalisation M1 comprend un empilement formé par la rondelle fixe RF, des lamelles L, de la rondelle de commande RC et d'une bague B adaptée pour maintenir l'empilement sous la collerette Col. Ces figures permettent d'observer la manière dont le déplacement de l'ergot T dans la rainure R induit la rotation de la rondelle de commande et le déplacement des pions de commande dans les rampes de commande GC et entraine le déplacement des pions mobiles selon les rampes de guidage GG.

Pour que la forme de l'ouverture formée par le diaphragme reste de la forme prédéterminée de la plus grande à la plus petite ouverture du diaphragme, il faut que l'ouverture OD formée par les lamelles ne soit pas tronquée par une des rondelles RC et RF. C'est à dire qu'il faut que les rondelles RC et RF présentent une ouverture centrale définissant une dimension maximale transverse (dans le plan *xy*) de l'ouverture du diaphragme. Cette dimension maximale transverse *dₘ* est illustrée en figure 4A qui correspond à la configuration la plus ouverture du diaphragme. Dans le mode de réalisation M1, la rainure R limite la course de l'ergot T de façon à ce que la rotation de la rondelle de commande RC autour de l'axe optique soit réalisée dans un secteur angulaire prédéterminé tel que *dₘ* soit égal au diamètre de l'ouverture des rondelles RC et RF.

La figure 5 illustre schématiquement une vue éclaté d'un diaphragme à iris 1 selon un mode de réalisation M2 de l'invention. Dans ce mode de réalisation, à titre d'exemple non limitatif, le diaphragme comprend m = 3 lamelles et la rondelle fixe RF comprend n = 6 rampes de guidage GG. Ainsi, l'ouverture formée par les lamelles (et donc le bokeh) a une forme sensiblement triangulaire. Comme dans le mode de réalisation M1, chaque lamelle comprend un pion de commande PC, ce qui implique que la rondelle de commande RC comprend trois rampes de commande GC (un pour chaque pion de commande).

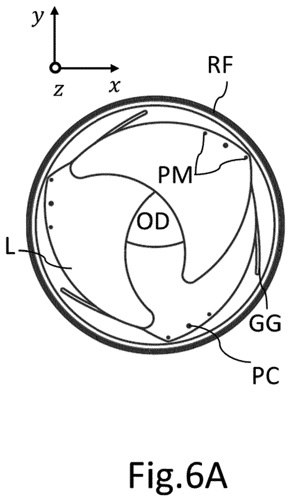

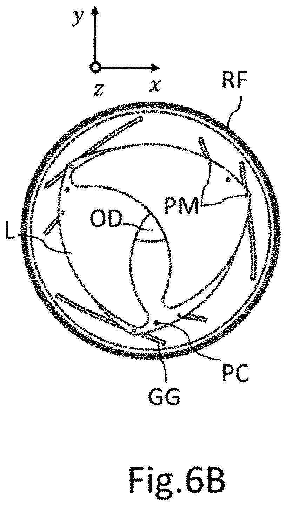

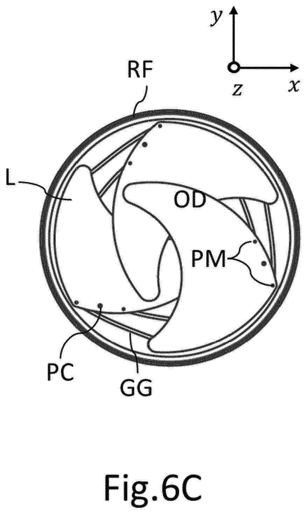

Les figures 6A à 6C illustrent une vue de face de la rondelle fixe RF et des lamelles L du diaphragme du mode de réalisation M2 pour différentes ouvertures du diaphragme (allant du plus ouvert pour la figure 6A vers le plus fermé pour 6C). Ces figures permettent d'observer la manière dont les lamelles se déplacent par rapport à la rondelle fixe en fonction de l'ouverture, ce déplacement étant induit par le déplacement des pions mobiles selon les rampes de guidage GG.

Selon d'autres modes de réalisation de l'invention, il est possible de concevoir des diaphragmes avec un nombre de lamelles supérieur à trois afin de définir des formes d'ouverture et donc des bokehs plus complexes.

## Revendications

1. Diaphragme à iris (1) présentant un axe optique (O) comprenant :
- une rondelle fixe (RF),
- une pluralité de $m ∈ ℕ > 1$ lamelles (L) définissant une ouverture (OD) du diaphragme avec une forme prédéterminée, les lamelles pouvant se déplacer dans un plan perpendiculaire à l'axe optique par rapport à la rondelle fixe, chaque lamelle comprenant un pion de commande (PC),
- une rondelle de commande (RC) adaptée pour tourner autour de l'axe optique par rapport à la rondelle fixe et comprenant m rampes de commande (GC), chaque pion de commande (PC) étant déplaçable dans une des rampes de commande respective en prenant appui le long de la rampe de commande respective,
une rotation de la rondelle de commande (RC) autour de l'axe optique entrainant, via le déplacement des pions de commande (PC) dans les rampes de commande, le déplacement dans le plan perpendiculaire à l'axe optique des lamelles par rapport à la rondelle fixe de manière à modifier une surface de l'ouverture en maintenant la forme prédéterminée de l'ouverture, sans induire une rotation de la forme prédéterminée par rapport à la rondelle fixe,
la rondelle fixe comprenant en outre une pluralité de $n ∈ ℕ$ rampes de guidage (GG), chaque lamelle comprenant deux pions mobiles (PM) respectifs chacun déplaçable dans une des rampes de guidage (GG) respective en prenant appui le long de la rampe de guidage respective, une forme de chaque rampe de guidage étant telle que la rotation de la rondelle de commande (RC) autour de l'axe optique entraine le déplacement de chacun des pions mobiles (PM) dans les rampes de guidage (GG) et produise le déplacement des lamelles par rapport à la rondelle fixe, **caractérisé en ce que** n ≥ 2m.

2. Diaphragme selon la revendication précédente, dans lequel chaque lamelle est associée à deux rampes de guidage respectives dans lequel les deux pions mobiles de cette lamelle sont déplaçables.

3. Diaphragme selon la revendication précédente, dans lequel le pion de commande de chaque lamelle est agencé entre les deux pions mobiles de cette lamelle.

4. Diaphragme selon la revendication 2 ou 3, comprenant *m* = 2 lamelles, ladite forme prédéterminée étant un œil de chat.

5. Diaphragme selon l'une quelconque des revendications précédentes, dans lequel la rondelle fixe et la rondelle de commande sont configurées pour induire la rotation de la rondelle de commande autour de l'axe optique dans un secteur angulaire prédéterminé.

6. Diaphragme selon la revendication précédente, dans lequel la rondelle fixe et la rondelle de commande sont configurées pour définir une dimension maximale transverse de l'ouverture.

7. Diaphragme selon l'une quelconque des revendications précédentes, dans lequel la pluralité de lamelles est agencée entre la rondelle fixe et la rondelle de commande.

8. Diaphragme selon l'une quelconque des revendications précédentes, dans lequel les lamelles et les rampes de guidages présentent une symétrie centrale par rapport à l'axe optique.

## Patentansprüche

1. Irisblende (1) mit einer optischen Achse (O), umfassend:
- eine feste runde Scheibe (RF),
- eine Vielzahl von $m ∈ ℕ > 1$ Lamellen (L), die eine Blendenöffnung (OD) mit einer vorgegebenen Form definieren, wobei sich die Lamellen in einer zur optischen Achse senkrechten Ebene relativ zur feststehenden Scheibe bewegen können und jede Lamelle einen Steuerzapfen (PC) umfasst,
- eine Steuerscheibe (RC), die so ausgelegt ist, dass sie sich relativ zur feststehenden Scheibe um die optische Achse drehen kann, und die *m* Steuerrampen (GC) umfasst, wobei jeder Steuerzapfen (PC) in einer der jeweiligen Steuerrampen verschiebbar ist, indem er sich entlang der jeweiligen Steuerrampe abstützt,
wobei eine Drehung der Steuerscheibe (RC) um die optische Achse über die Verschiebung des Steuerzapfens (PC) in den Steuerrampen die Verschiebung der Lamellen in der zur optischen Achse senkrechten Ebene relativ zur feststehenden Scheibe bewirkt, um eine Fläche der Öffnung zu verändern, wobei die vorgegebene Form der Öffnung beibehalten wird, ohne eine Drehung der vorgegebenen Form relativ zur feststehenden Scheibe zu bewirken,
wobei die feststehende Scheibe weiter eine Vielzahl von $n ∈ ℕ$ Führungsrampen (GG) umfasst, wobei jede Lamelle zwei jeweilige bewegliche Zapfen (PM) umfasst, die jeweils in einer der jeweiligen Führungsrampen (GG) verschiebbar sind, indem sie sich entlang der jeweiligen Führungsrampe abstützen, wobei die Form jeder Führungsrampe so beschaffen ist, dass die Drehung der Steuerscheibe (RC) um die optische Achse die Verschiebung jedes der beweglichen Zapfen (PM) in den Führungsrampen (GG) bewirkt und die Verschiebung der Lamellen relativ zur feststehenden Scheibe hervorruft, **dadurch gekennzeichnet, dass** n ≥ 2m gilt.

2. Blende nach dem vorstehenden Anspruch, bei der jede Lamelle zwei jeweiligen Führungsrampen zugeordnet ist, worin die beiden beweglichen Zapfen dieser Lamelle verschiebbar sind.

3. Blende nach dem vorstehenden Anspruch, wobei der Steuerzapfen jeder Lamelle zwischen den beiden beweglichen Zapfen dieser Lamelle angeordnet ist.

4. Blende nach Anspruch 2 oder 3, umfassend *m* = 2 Lamellen, wobei die vorgegebene Form ein Katzenauge ist.

5. Blende nach einem der vorstehenden Ansprüche, wobei die feste Scheibe und die Steuerscheibe so ausgebildet sind, dass sie die Drehung der Steuerscheibe um die optische Achse in einem vorgegebenen Winkelbereich bewirken.

6. Blende nach dem vorstehenden Anspruch, wobei die feste Scheibe und die Steuerscheibe so ausgebildet sind, dass sie eine maximale Querabmessung der Öffnung definieren.

7. Blende nach einem der vorstehenden Ansprüche, wobei die mehreren Lamellen zwischen der feststehenden Scheibe und der Steuerscheibe angeordnet sind.

8. Blende nach einem der vorstehenden Ansprüche, wobei die Lamellen und die Führungsrampen eine zentrale Symmetrie in Bezug auf die optische Achse aufweisen.

## Claims

1. Iris diaphragm (1) having an optical axis (O), comprising:
- a fixed ring (RF),
- a plurality of $m ∈ ℕ > 1$ blades (L) defining an aperture (OD) of the diaphragm with a predetermined shape, the blades being movable in a plane perpendicular to the optical axis relative to the fixed ring, each blade comprising a control pin (PC),
- a control ring (RC) adapted to rotate about the optical axis relative to the fixed ring and comprising m control ramps (GC), each control pin (PC) being movable in one of the respective control ramps while bearing against the respective control ramp,
rotation of the control ring (RC) about the optical axis causing, via movement of the control pins (PC) in the control ramps, movement of the blades in the plane perpendicular to the optical axis of the blades relative to the fixed ring so as to modify a surface of the aperture while maintaining the predetermined shape of the aperture, without inducing rotation of the predetermined shape relative to the fixed ring,
the fixed ring further comprising a plurality of $n ∈ ℕ$ guide ramps (GG), each blade comprising two respective movable pins (PM), each movable in one of the respective guide ramps while bearing against the respective guide ramp, each guide ramp having a shape such that rotation of the control ring (RC) about the optical axis causes movement of each of the movable pins (PM) in the guide ramps (GG) and produces movement of the blades relative to the fixed ring, **characterized in that** n ≥ 2m.

2. Diaphragm according to the preceding claim, wherein each blade is associated with two respective guide ramps in which the two movable pins of that blade are movable.

3. Diaphragm according to the preceding claim, wherein the control pin of each blade is arranged between the two movable pins of that blade.

4. Diaphragm according to claim 2 or 3, comprising *m =* 2 blades, said predetermined shape being a cat's eye.

5. Diaphragm according to any one of the preceding claims, wherein the fixed ring and the control ring are configured to induce rotation of the control ring about the optical axis within a predetermined angular sector.

6. Diaphragm according to the preceding claim, wherein the fixed ring and the control ring are configured to define a maximum transverse dimension of the aperture.

7. Diaphragm according to any one of the preceding claims, wherein the plurality of blades is arranged between the fixed ring and the control ring.

8. Diaphragm according to any one of the preceding claims, wherein the blades and the guide ramps exhibit central symmetry with respect to the optical axis.
